# EUROPÄISCHE PATENTANMELDUNG

(11) **EP 2 113 531 A2**
(43) Veröffentlichungstag der Anmeldung: **04.11.2009**
(21) Anmeldenummer: 09154948.5
(22) Anmeldetag: 12.03.2009
(51) Int. Cl.: C08L 15/00, C08L 7/00, C08L 9/00, B60C 1/00, C08K 3/36, C08K 5/00

(54) **Kautschukmischung mit verbessertem Alterungsverhalten**

(30) Priorität: 23.04.2008 DE 102008020312
(71) Anmelder: Continental Aktiengesellschaft, 30165 Hannover (DE)
(72) Erfinder: WEINREICH, Hajo, 31840, Hessisch Oldendorf (DE); WAGEMANN, Jürgen, 31162, Bad Salzdetfurth (DE)
(74) Vertreter: Finger, Karsten

(57) **Zusammenfassung**

Die Erfindung betrifft zwei Kautschukmischungen A und B mit verbessertem Alterungsverhalten, insbesondere für Fahrzeugluftreifen, Riemen und Gurte, die jeweils durch folgende Zusammensetzung gekennzeichnet sind:
- 0,1 - 50 phr zumindest eines natürlichen oder synthetischen Polyisoprens und
- 1 - 300 phr zumindest einer amorphen Kieselsäure und / oder Fällungskieselsäure und
- 0 - 120 phr zumindest eines Rußes und
- 0,5 - 10 phr zumindest eines Ozonschutzmittels und
- 0,5 - 10 phr zumindest eines Sekundärbeschleunigers und
- 2 - 200 phr weitere Zusatzstoffe und

A)
- 0,1 - 40 phr zumindest eines Butadienkautschuks und
- 10 - 99,8 phr zumindest eines modifizierten Styrol-Butadienkautschnks.

oder
B)
- 10 - 99,8 phr zumindest eines Butadienkautschuks und
- 0,1 - 40 phr zumindest eines modifizierten Styrolbutadienkautschuks.

## Beschreibung

Die Erfindung betrifft zwei Kautschukmischungen, insbesondere für Fahrzeugreifen, Riemen und Gurte.

Da die Fahreigenschaften eines Reifens, insbesondere Fahrzeugreifens, in einem großen Umfang von der Kautschukzusammensetzung des Laufstreifens abhängig sind, werden besonders hohe Anforderungen an die Zusammensetzung der Laufstreifenmischung gestellt. So wurden vielfältige Versuche unternommen, die Eigenschaften des Reifens durch die Variation der Polymerkomponenten, der Füllstoffe und der sonstigen Zuschlagstoffe in der Laufstreifenmischung positiv zu beeinflussen. Aus umwelttechnischen Gesichtspunkten sind hierbei in den letzten Jahren zunehmend der Rollwiderstand, der mit dem Kraftstoffverbrauch korreliert ist, und die Alterungsbeständigkeit, die aufgrund des weltweit zunehmenden Ozongehaltes und weiterer Umweltbelastungen immer relevanter wird, zu nennen. Gleichzeitig sollen sich der Fahrkomfort und die Fahrsicherheit, im Wesentlichen dargestellt durch Nassrutschverhalten, Handling und Rissbeständigkeit, nicht verschlechtern.
Dabei muss man berücksichtigen, dass eine Verbesserung in der einen Reifeneigenschaft oft eine Verschlechterung einer anderen Eigenschaft mit sich bringt.

Um Reifeneigenschaften wie Abrieb, Nassrutschverhalten und Rollwiderstand zu beeinflussen, ist es z. B. bekannt, Kautschuke mit unterschiedlichen Modifizierungen für die Kautschukmischungen zu verwenden.
Ebenso ist die Verwendung verschiedener Ozonschutzmittel zwecks Optimierung des Alterungsverhaltens der Kautschukmischungen, die in Reifen und technischen Gummiartikeln zum Einsatz kommen, bekannt.

Der diesbezügliche Stand der Technik soll nun näher vorgestellt werden.
Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Zum Stand der Technik sind daher folgende Druckschriften zu würdigen:
(D1) US 2001/0031836 A1
(D2) KR 1020040102839 A
(D3) DE 44 42 691 A1
(D4) DE 44 42 692 A1

Aus der D1 sind Schutzmittel für Kautschukmischungen mit verbessertem Alterungsschutzverhalten, die mit Schwefel oder schwefelspendenden Substanzen vernetzt werden, bekannt, welche gegen Alterung, Ermüdung und Ozon wirken. Die Kautschukmischungen enthalten 0,1 phr oder mehr eines N,N'-disubstituierten p-phenylendiamin-Schutzmittels und kein Elastomer-Copolymer mit Glycidylgruppen.

D2 beschreibt eine Kautschukmischung für die Seitenwand von Fahrzeugreifen, die N-(1,3-dimethylbutyl)-N'-phenyl-para-phenylendiamin und polymerisiertes 2,2,4-trimethyl-1,2dihydroquinolin und Wachs, jeweils in Mengen von 1 - 3 phr, enthält.

Kautschukmischungen zur Verbesserung des Zielkonfliktes von Rollwiderstand vs. Abrieb sind aus D3 und D4 bekannt. Durch ein geeignetes Polymersystem, enthaltend jeweils lösungspolymerisierten Styrolbutadienkautschuk bzw. emulsionspolymerisierten Styrolbutadienkautschuk, sollen die durch Verwendung von Kieselsäure hervorgerufenen positiven Eigenschaften mit denen durch Ruß verursachten vorteilhaften Eigenschaften zusammengefügt werden. In den Ausführungsbeispielen sind verschiedene Alterungsschutz- bzw. Ozonschutzmittel erwähnt.

Der vorliegenden Erfindung liegt nun die Aufgabe zu Grunde, eine Kautschukmischung, insbesondere für Fahrzeugreifen, Riemen und Gurte, bereitzustellen, welche sich durch ein verbessertes Alterungsverhalten bei gleich bleibendem oder optimiertem Rollwiderstand auszeichnet.

Gelöst wird die Aufgabe dadurch, dass die Kautschukmischung der eingangs genannten Art zumindest durch folgende Zusammensetzungen A oder B gekennzeichnet ist: **A**
- 0,1 - 50 phr zumindest eines natürlichen oder synthetischen Polyisoprens und
- 0,1 - 40 phr zumindest eines Butadienkautschuks und
- 10 - 99,8 phr zumindest eines modifizierten Styrolbutadienkautschuks und
- 1 - 300 phr zumindest einer amorphen Kieselsäure und / oder Fällungskieselsäure und
- 0 - 120 phr zumindest eines Rußes und
- 0,5 - 10 phr zumindest eines Ozonschutzmittels und
- 0,5 - 10 phr zumindest eines Sekundärbeschleunigers und
- 2 - 200 phr weitere Zusatzstoffe.
**B**
- 0,1 - 50 phr zumindest eines natürlichen oder synthetischen Polyisoprens und
- 10 - 99,8 phr zumindest eines Butadienkautschuks und
- 0,1 - 40 phr zumindest eines modifizierten Styrolbutadienkautschuks und
- 1 - 300 phr zumindest einer amorphen Kieselsäure und / oder Fällungskieselsäure und
- 0 - 120 phr zumindest eines Rußes und
- 0,5 - 10 phr zumindest eines Ozonschutzmittels und
- 0,5 - 10 phr zumindest eines Sekundärbeschleunigers und
- 2 - 200 phr weitere Zusatzstoffe.

Überraschenderweise wurde gefunden, dass sich durch eine Kombination von zumindest einem modifiziertem Styrolbutadienkautschuk mit zumindest einem Ozonschutzmittel und mit zumindest einem Sekundärbeschleuniger ein synergistischer Effekt zeigt, der sich signifikant positiv auf das Alterungsverhalten auswirkt ohne den Rollwiderstand nennenswert zu verschlechtern. Gleichzeitig ergibt sich durch obige Kombination ein überraschendes Vulkanisationsverhalten derart, dass die Ausvulkanisationszeit (t90) minimiert wird, ohne die Anvulkanisationszeit (t10) stark reduzieren zu müssen und die Vernetzungsgeschwindigkeit k(30%/90%) optimiert wird. Aus ökonomischen und ökologischen Gesichtspunkten betrachtet, stellt diese letztere Maßnahme im industriellen Maßstab eine deutliche Kosten- und Energiesenkung dar, da die Mischungen bzw. die Kautschukprodukte in kürzerer Zeit vulkanisiert werden können.
Dies gilt nicht nur für den Fahrzeuglaufstreifen, sondern auch für weitere innere Reifenbauteile. Die Kautschukmischungen für die weiteren inneren Reifenbauteile werden im Folgenden zusammengefasst, und wie in der Reifentechnologie üblich, auch als body compounds oder body-Mischungen bezeichnet.

Weitere Anwendung findet die erfindungsgemäße Kautschukmischung der Zusammensetzung A oder B in der Mischungsentwicklung für Riemen und Gurte, insbesondere für Fördergurte.
Im täglichen Einsatz unterliegt insbesondere die Laufseite von Fördergurten starken mechanischen Beanspruchungen, z. B. bei Umlenkung an Antriebs-, Umlenk- und / oder Knicktrommeln. Zusätzlich kommen bei der Verwendung von Fördergurten im Außeneinsatz die durch natürliche und anthropogen verursachte Umweltbedingungen zum Tragen, die ein verbessertes Alterungsverhalten zur Sicherung einer langen Lebensdauer bedingen.

Die Kautschukmischung der Zusammensetzung A enthält 0,1- 50 phr, bevorzugt 0,2 - 40 phr, besonders bevorzugt 0,5 - 30 phr, zumindest eines natürlichen oder synthetischen Polyisoprens und 0,1 - 40 phr, bevorzugt 1 - 40 phr, besonders bevorzugt 2 - 30 phr, zumindest eines Butadienkautschuks. Weiterhin enthält die Kautschukmischung der Zusammensetzung A 10 - 99,8 phr, bevorzugt 10 - 80 phr, besonders bevorzugt 10 - 70 phr, zumindest eines modifizierten Styrolbutadienkautschuks. Der modifizierte Styrolbutadienkautschuk kann lösungspolymerisiert oder emulsionspolymerisiert sein, auch das gleichzeitige Vorkommen eines modifizierten lösungspolymerisierten Styrolbutadienkautschuks und eines modifizierten emulsionspolymerisierten Styrolbutadienkautschuks ist möglich.
Der Styrol-Butadienkautschuk ist hierbei mit Hydroxylgruppen und / oder Epoxygruppen und / oder Siloxangruppen und / oder Aminogruppen und / oder Aminosiloxan und / oder Carboxylgruppen und / oder Phtalocyaningruppen modifiziert. Es kommen aber auch weitere, dem Fachmann bekannte, Modifizierungen, auch als Funktionalisierungen bezeichnet, in Frage.

Die Kautschukmischung der Zusammensetzung B enthält 0,1 *-* 50 phr, bevorzugt 0,2 - 40 phr, besonders bevorzugt 0,5 - 30 phr, zumindest eines natürlichen oder synthetischen Polyisoprens und 10 - 99,8 phr, bevorzugt 10 - 80 phr, besonders bevorzugt 10 - 70 phr, zumindest eines Butadienkautschuks. In einer besonders bevorzugten Ausführungsform ist der Butadienkautschuk ein Vinyl-Butadienkautschuk mit einem Vinylanteil von 40 - 85 Gew. -%. Der Vinyl-Butadienkautschuk kann auch mit allen, dem Fachmann bekannten, Funktionalisierungen versehen sein. Weiterhin enthält die Kautschukmischung der Zusammensetzung B 0,1 - 40 phr, bevorzugt 1 - 40 phr, besonders bevorzugt 2 - 30 phr, zumindest eines modifizierten Styrolbutadienkautschuks. Der modifizierte Styrolbutadienkautschuk kann lösungspolymerisiert oder emulsionspolymerisiert sein, auch das gleichzeitige Vorkommen eines modifizierten lösungspolymerisierten Styrolbutadienkautschuks und eines modifizierten emulsionspolymerisierten Styrolbutadienkautschuks ist möglich.
Der Styrol-Butadienkautschuk ist hierbei mit Hydroxylgruppen und / oder Epoxygruppen und / oder Siloxangruppen und / oder Aminogruppen und / oder Aminosiloxan und / oder Carboxylgruppen und / oder Phtalocyaningruppen modifiziert. Es kommen aber auch weitere, dem Fachmann bekannte, Modifizierungen, auch als Funktionalisierungen bezeichnet, in Frage.

Den Kautschukmischungen der Zusammensetzungen A und B ist gemein, dass sie jeweils noch 0 - 50 phr, insbesondere 0,1 - 50 phr, insbesondere wiederum 0,5 -50 phr zumindest eines weiteren polaren oder unpolaren Kautschuks enthalten. Der polare oder unpolare Kautschuk ist dabei ausgewählt aus der Gruppe, bestehend aus nicht modifiziertem Styrolbutadienkautschuk und / oder Flüssigkautschuken und / oder Halobutylkautschuk und / oder Polynorbomen und / oder Isopren-Isobutylen-Copolymer und / oder Ethylen-Propylen-Dien-Kautschuk und / oder Nitrilkautschuk und / oder Chloroprenkautschuk und / oder Acrylat-Kautschuk und / oder Fluorkautschuk und / oder Silikon-Kautschuk und /oder Polysulfidkautschuk und / oder Epichlorhydrinkautschuk und / oder Styrol-Isopren-Butadien-Terpolymer. Diese Kautschuke finden vor allem in technischen Gummiartikeln, wie Gurte und Riemen Verwendung.

Weiterhin enthalten die Kautschukmischungen der Zusammensetzung A und B jeweils noch 1 - 300 phr, bevorzugt 1 - 250 phr, besonders bevorzugt 1 - 200 phr, wiederum besonders bevorzugt 1 - 150 phr, zumindest einer amorphen Kieselsäure und / oder Fällungskieselsäure.
Die in der Reifenindustrie und in der technischen Kautschukindustrie eingesetzten Kieselsäuren sind in der Regel gefällte Kieselsäuren, die insbesondere nach ihrer Oberfläche charakterisiert werden. Zur Charakterisierung werden dabei die Stickstoff-Oberfläche, der so genannten BET-Zahl, gemäß DIN 66131 und DIN 66132 als Maß für die innere und äußere Füllstoffoberfläche in m²/g und die CTAB-Oberfläche gemäß ASTM D 3765 als Maß für die äußere Oberfläche, die oftmals als die kautschukwirksame Oberfläche angesehen wird, in m²/g angegeben.
Erfindungsgemäß werden amorphe Kieselsäuren und / oder Fällungskieselsäuren mit einer Stickstoff-Oberfläche zwischen 120 und 300 m²/g, bevorzugt zwischen 150 und 250 m²/g, und einer CTAB-Oberfläche zwischen 120 und 250 m²/g, bevorzugt zwischen 140 und 230 m²/g, eingesetzt.

Von der Gesamtmenge an Kieselsäure kann ein Teil durch ein Kupplungsagens, bevorzugt Silan, an die Polymermatrix angebunden werden und ein Teil nicht an die Polymermatrix angebunden werden. Dies bedeutet, dass, ausgehend von der Gesamtmenge an Kieselsäure, diese durch das Kupplungsagens vollständig oder nur teilweise an die Polymermatrix angebunden wird oder keinerlei Anbindung der Kieselsäure an die Polymermatrix erfolgt.

Falls ein Kupplungsagens, bevorzugt in der Form von Silan, verwendet wird, so beträgt die Menge Kupplungsagens 0,1 - 20 phr, bevorzugt 0,5 - 15 phr. Als Silan-Kupplungsagenzien können dabei alle dem Fachmann für die Verwendung in Kautschukmischungen bekannten Silan-Kupplungsagenzien verwendet werden.

Beide Kautschukmischungen, jeweils der Zusammensetzung A und der Zusammensetzung B, enthalten 0 - 120 phr, bevorzugt 0 - 100 phr, insbesondere bevorzugt 0 - 80 phr, wenigstens aber 0,1 phr, insbesondere allerdings wenigstens aber 0,5 phr, zumindest eines Rußes. In einer besonders bevorzugten Ausführungsform hat der Ruß eine Iodzahl, gemäß ASTM D 1510, die auch als Iodabsorptionszahl bezeichnet wird, größer oder gleich 75 g /kg und einer DBP-Zahl größer oder gleich 80 cm³ /100g. Die DBP-Zahl gemäß ASTM D 2414 bestimmt das spezifische Absorptionsvolumen eines Rußes oder eines hellen Füllstoffes mittels Dibutylphthalat.
Die Verwendung eines solchen Russtyps in der Kautschukmischung gewährleistet einen bestmöglichen Kompromiss aus Abriebwiderstand und Wärmeaufbau, der wiederum den Rollwiderstand beeinflusst. Bevorzugt ist hierbei, wenn lediglich ein Russtyp in der jeweiligen Kautschukmischung verwendet wird.

Erfindungswesentlich ist, dass die Kautschukmischung der Zusammensetzung A und die Kautschukmischung der Zusammensetzung B jeweils 0,5 - 10 phr, bevorzugt 1 - 10 phr, besonders bevorzugt 2 - 8 phr zumindest eines Ozonschutzmittels enthält. Das Ozonschutzmittel ist dabei ausgewählt aus der Gruppe der Paraphenylendiamine und / oder der Diphenylamine.
Bevorzugt handelt es sich hierbei um N-(1,3-dimethylbutyl)-N'-phenyl-p-phenylendiamin und / oder Octyliertes Diphenylamin. Es können aber auch Aceton/Diphenylamin-Kondensationsprodukte und / oder N,N'-Bis-(1,4-dimethylpentyl)-p-phenylendiamin und / oder N-isopropyl-N'-phenyl-p-phenylendiamin und / oder N,N'-Diphenyl-p-phenylendiamin und / oder N,N'-Ditolyl-p-phenylendiamin und / oder ein Gemisch, ein so genannter Blend, aus Alkyl-aryl-p-phenylendiaminen und / oder ein Gemisch aus Alkyl-aryl- und dialkyl-p-phenylendiaminen verwendet werden. Möglich ist aber auch die Verwendung von substituierten Phenolen und / oder substituierten Bisphenolen und / oder Dihydrochinolinen und / oder Phenyl-Naphtyl-aminen und / oder Benzimidazolen.

In einer bevorzugten Ausführungsform enthält die erfindungsgemäße Kautschukmischung der Zusammensetzung A und die erfindungsgemäße Kautschukmischung der Zusammensetzung B jeweils nur ein einziges der aufgeführten Ozonschutzmittel. Die Verwendung von wenigstens zwei Ozonschutzmitteln der genannten Art ist allerdings auch möglich.

Der obig beschriebene synergistische Effekt wird nur erreicht, wenn in der Kautschukmischung der Zusammensetzung A und in der Kautschukmischung der Zusammensetzung B jeweils 0,5 - 10 phr, bevorzugt 0,5 - 8 phr, zumindest eines Sekundärbeschleunigers enthalten sind. Der synergistische Effekt zur Verbesserung des Alterungsverhaltens bei gleich bleibendem oder verbessertem Rollwidestand ergibt sich nur durch die Kombination zumindest eines modifizierten Styrolbutadienkautschuks und zumindest eines Ozonschutzmittels und zumindest eines Sekundärbeschleunigers. Die quantitativen Angaben gemäß Kennzeichen des Anspruchs 1 und gemäß Kennzeichen des Anspruchs 11 sind hierbei von besonderer Bedeutung.

Besonders bevorzugt ist es, wenn der Sekundärbeschleuniger Diphenylguanidin ist.

Es können allerdings auch weitere bzw. andere basische Sekundärbeschleuniger verwendet werden, die eine stärkere Interaktion zur Oberfläche der eingesetzten Kieselsäure als die dem Fachmann bekannten Primärbeschleuniger aufweisen.

Überraschenderweise wurde zusätzlich herausgefunden, dass bezüglich des verbesserten Alterungsverhaltens ein direkter Zusammenhang zwischen der verwendeten amorphen Kieselsäure und / oder Fällungskieselsäure und des Sekundärbeschleunigers besteht. Ein besonders gutes verbessertes Alterungsverhalten der Kautschukmischung der Zusammensetzung A und der Kautschukmischung der Zusammensetzung B zeigt sich jeweils, wenn das Verhältnis zwischen amorpher Kieselsäure und / oder Fällungskieselsäure und Sekundärbeschleuniger folgender Formel entspricht: (phr Kieselsäure x BET-Zahl Kieselsäure) / phr Sekundärbeschleuniger < 10000 m²/g, bevorzugt (phr Kieselsäure x BET-Zahl Kieselsäure) / phr Sekundärbeschleuniger < 8000 m²/g, besonders bevorzugt (phr Kieselsäure x BET-Zahl Kieselsäure) / phr Sekundärbeschleuniger < 6000 m²/g.

Weiterhin enthalten die Kautschukmischung der Zusammensetzung A und die Kautschukmischung der Zusammensetzung B jeweils noch weitere Zusatzstoffe.
Weitere Zusatzstoffe beinhaltet im Wesentlichen das Vemetzungssystem (Vernetzer, Beschleuniger und Verzögerer), Weichmacher, weitere Alterungsschutzmittel (Lichtschutzwachse), Mastikationshilfsmittel, und weitere Aktivatoren.
Der Mengenanteil der Gesamtmenge an weiteren Zusatzstoffen beträgt 2 bis 200 phr, bevorzugt 2 bis 150 phr und besonders bevorzugt 5 - 100 phr.

Die erfindungsgemäße Kautschukmischung, jeweils der Zusammensetzung A und der Zusammensetzung B, enthält weiterhin 4 - 50 phr zumindest eines Weichmacheröls, wobei das Weichmacheröl bevorzugt ein Mineralöl ist, das ausgewählt ist aus der Gruppe, bestehend aus DAE (Destillated Aromatic Extracts) und / oder RAE (Residual Aromatic Extract) und / oder TDAE (Treated Destillated Aromatic Extracts) und / oder MES (Mild Extracted Solvents) und / oder naphtenische Öle.

Es können in der Kautschukmischung, jeweils der Zusammensetzung A und der Zusammensetzung B, noch 0 - 20 phr zumindest eines weiteren zusätzlichen Weichmachers vorhanden sein. Dieser weitere Weichmacher kann ein synthetischer Weichmacher und / oder eine Fettsäure und / oder ein Fettsäurederivat und / oder ein Harz und / oder ein Faktis sein.

Des Weiteren enthält die Kautschukmischung noch 0,1 - 10 phr, bevorzugt 0,2 - 8 phr, besonders bevorzugt 0,2 - 4 phr, Zinkoxid.
Es ist üblich, einer Kautschukmischung für die Schwefelvernetzung mit Vulkanisationsbeschleunigern Zinkoxid als Aktivator meist in Kombination mit Fettsäuren (z. B. Stearinsäure) zuzusetzen. Der Schwefel wird dann durch Komplexbildung für die Vulkanisation aktiviert. Das herkömmlicherweise verwendete Zinkoxid weist dabei in der Regel eine BET-Oberfläche von weniger als 10 m²/g auf. Es kann aber auch so genanntes nano-Zinkoxid mit einer BET-Oberfläche von 10 bis 60 m²/g verwendet werden.

Die Vulkanisation der Kautschukmischung, jeweils der Zusammensetzung A und der Zusammensetzung B, wird in Anwesenheit von Schwefel oder Schwefelspendern durchgeführt, wobei einige Schwefelspender zugleich als Vulkanisationsbeschleuniger wirken können. Schwefel oder Schwefelspender werden im letzten Mischungsschritt in den vom Fachmann gebräuchlichen Mengen (0,2 bis 8 phr, elementarer Schwefel bevorzugt in Mengen von 1,0 bis 3,5 phr) der jeweiligen Kautschukmischung zugesetzt. Zur Kontrolle der erforderlichen Zeit und / oder Temperatur der Vulkanisation und zur Verbesserung der Vulkanisateigenschaften kann die Kautschukmischung vulkanisationsbeeinflussende Substanzen wie Vulkanisationsbeschleuniger, Vulkanisationsverzögerer und Vulkanisationsaktivatoren, wie obig beschrieben, enthalten.

Die Herstellung der erfindungsgemäßen jeweiligen Kautschukmischung erfolgt nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt. Die Fertigmischung wird z.B. durch einen Extrusionsvorgang weiterverarbeitet und in die entsprechende Form gebracht.

Der Erfindung liegt weiterhin die Aufgabe zu Grunde, obig beschriebene Kautschukmischungen der Zusammensetzung A und B, zur Herstellung eines Reifens, insbesondere zur Herstellung des Laufstreifens eines Reifens und / oder einer Body-Mischung eines Reifens und zur Herstellung von Riemen und Gurten zu verwenden.

Zur Verwendung in Reifen, insbesondere in Fahrzeugluftreifen, wird die Mischung bevorzugt in die Form eines Laufstreifens gebracht und bei der Herstellung des Fahrzeugreifenrohlings wie bekannt aufgebracht. Der Laufstreifen kann aber auch in Form eines schmalen Kautschukmischungsstreifens auf einen Reifenrohling aufgewickelt werden. Ist der Laufstreifen, wie eingangs beschrieben, zweigeteilt, so findet die Kautschukmischung bevorzugt Anwendung als Mischung für die Base.
Die Herstellung der erfindungsgemäßen Kautschukmischung zur Verwendung als Body-Mischung in Reifen erfolgt wie bereits für den Laufstreifen beschrieben. Der Unterschied liegt in der Formgebung nach dem Extrusionsvorgang. Die so erhaltenen Formen der erfindungsgemäßen jeweiligen Kautschukmischung für eine oder mehrere unterschiedliche Body-Mischungen dienen dann dem Aufbau eines Reifenrohlings. Zur Verwendung der erfindungsgemäßen jeweiligen Kautschukmischung in Riemen und Gurten, insbesondere in Fördergurten, wird die extrudierte Mischung in die entsprechende Form gebracht und dabei oder nachher häufig mit Festigkeitsträgern, z.B. synthetische Fasern oder Stahlcorde, versehen. Zumeist ergibt sich so ein mehrlagiger Aufbau, bestehend aus einer und / oder mehrerer Lagen Kautschukmischung, einer und / oder mehrerer Lagen gleicher und / oder verschiedener Festigkeitsträger und einer und / oder mehreren weiteren Lagen dergleichen und / oder einer anderen Kautschukmischung.

Die Erfmdung soll nun anhand von Vergleichs- und Ausführungsbeispielen, die in Tabellen 1a bzw. 1b und 2a bzw. 2b zusammengefasst sind, näher erläutert werden. In den Tabellen 1a und 2a wird die jeweilige Mischungsrezeptur angegeben, währen die Tabellen 1b und 2b die entsprechenden Prüfergebnisse aufzeigen.
V 1 bis V 10 stellen dabei die Vergleichsmischungen dar, während E 1 bis E4 jeweils eine erfindungsgemäße Kautschukmischung aufweisen.
Bei sämtlichen in der Tabelle enthaltenen Mischungsbeispielen sind, wie bereits obig beschrieben, die angegebenen Mengenangaben Gewichtsteile, die auf 100 Gewichtsteile Gesamtkautschuk bezogen sind (phr).

Die Mischungsherstellung erfolgte unter üblichen Bedingungen in zwei Stufen in einem Labortangentialmischer. Aus sämtlichen Mischungen wurden Prüfkörper durch Vulkanisation hergestellt und mit diesen Prüfkörpern für die Kautschukindustrie typische Materialeigenschaften bestimmt. Für die obig beschriebenen Tests an Prüfkörpern wurden folgende Testverfahren angewandt:
- Relativer Vernetzungsgrad von 5% (t5, Anvulkanisationszeit) und 90% (t90, Ausvulkanisationszeit) mittels rotorlosem Vulkameter (MDR = Moving Disc Rheometer) gemäß DIN 53 529
- Vernetzungsgeschwindigkeit k(30% / 90%) zwischen 30% und 90% Umsatz gemäß DIN 53 529
- Verlustfaktor tan d, synonym zu tan δ, bei 55°C aus dynamisch-mechanischer Messung gemäß DIN 53 513
- Wärmebildung (Temperaturerhöhung) ermittelt mittels Kugeltemperaturentwicklung bei dynamischer Beanspruchung, wobei die Temperaturerhöhung die Differenz zwischen der Temperatur, die im Zentrum einer Kugel (60 mm) nach dynamischer Druckbelastung (zwischen 206 N und 803 N) und definierter Beanspruchungszeit (5000 bis 20000 Umdrehungen in einer Kugellaufrinne) gemessen wird, und der Raumtemperatur
- Ozonbeständigkeit nach einem dynamischen Ozontest bei 0 -20 % Dehnung, 40°C und 50 pphm Ozon analog DIN 53 509; Beurteilung: 0 - 4, wobei 0 = ohne Risse und 4 = Probe zerstört

Aus den Tabellen ist eindeutig zu entnehmen, dass sich überraschenderweise ein hervorragendes synergistisches Zusammenwirken des modifizierten Polymers mit Ozonschutzmittel und Sekundärbeschleuniger, siehe E1 und E2, hinsichtlich des Ozonschutzverhaltens ergibt. Des Weiteren zeigt sich, dass die Ausvulkanisationszeit t90 sich teilweise, siehe E2 und E4, um etwa die Hälfte reduzieren lässt. Ebenso zeigt sich ein synergistischer Performancegewinn (= Leistungsgewinn) von +134% (siehe E2) bzw. + 146% (siehe E4) bezüglich der Vernetzungsgeschwindigkeit. Dies stellt im produktionstechnischen Maßstab ein enormes Energie- und Kostensenkungspotential dar.

Der Verlustfaktor tan d ist ein Relativmaß für den Energieverlust im Vergleich zur wiedergewonnenen Energie. Diese sogenannte Hysterese ist im Temperaturbereich um 55°C - gemessen nach DIN 53 513 und gemäß der WLF-Transformation (siehe J. Schnetger "Lexikon der Kautschuktechnik", Hüthig-Verlag, 3. Auflage, 2004, S. 609ff) - proportional dem Rollwiderstandsverhalten einer Kautschukmischung. Hier zeigt sich ein Performancegewinn von über 15% bei der Kombination von modifiziertem Styrolbutadienkautschuk mit Ozonschutzmittel und Sekundärbeschleuniger in den Mengen gemäß Kennzeichen des Anspruchs 1 und des Anspruchs 11.
Bestätigt wird das positive Hystereseverhalten durch einen Versuch, in dem durch Verwendung eines, im Vergleich zu einem in einer Eplexorprüfung gemäß DIN 53 513 verwendeten Prüfkörper, großvolumigen Prüfgegenstandes die Eigentemperaturentwicklung bei dynamischer Beanspruchung gemessen wird. Das untersuchte Mischungsvolumen ist hierbei um den Faktor 60 größer als bei einer Eplexorprüfung gemäß DIN 53 513. Der Grad der Temperaturerhöhung wird zur Abschätzung des Verhaltens eines Fertigproduktes unter Praxisbedingungen herangezogen. Diesbezüglich lässt sich in den erfindungsgemäßen Kautschukmischungen ebenso ein Performancegewinn von über 20% feststellen.

**Tabelle 1a**

| **Zusammensetzung** | | **V1** | **V2** | **V3** | **V4** | **V5** | **E1** | **E2** |
|---|---|---|---|---|---|---|---|---|
| | | | | | | | | |
| Naturkautschuk | TSR | 10,0 | 10,0 | 10,0 | 10,0 | 10,0 | 10,0 | 10,0 |
| Butadienkautschuk | BUNA CB25 (Fa. Lanxess) | 20,0 | 20,0 | 20,0 | 20,0 | 20,0 | 20,0 | 20,0 |
| Styrolbutadienkautschuk | NS116 (Fa. Nippon Zeon) | 60,0 | 60,0 | 60,0 | 60,0 | - | - | - |
| Styrolbutadienkautschuk | NS616 (Fa. Nippon Zeon, OH-Gruppen und / oder Epoxygruppen modifiziert) | - | - | - | - | 60,0 | 60,0 | 60,0 |
| Ruß | N339 (Fa. DGW) | 10,0 | 10,0 | 10,0 | 10,0 | 10,0 | 10,0 | 10,0 |
| Fällungskieselsäure | VN3 (Fa. Degussa) | 75,0 | 75,0 | 75,0 | 75,0 | 75,0 | 75,0 | 75,0 |
| Weichmacher | RAE (Tudalen 5138, Fa. Dahleke) | 30,0 | 30,0 | 30,0 | 30,0 | 30,0 | 30,0 | 30,0 |
| Ozonschutzmittel | 6PPD | - | 2,0 | - | - | - | 2,0 | 2,0 |
| Zinkoxid | Zinkoxid | 2,0 | 2,0 | 2,0 | 2,0 | 2,0 | 2,0 | 2,0 |
| Stearinsäure | Stearinsäure | 1,0 | 1,0 | 1,0 | 1,0 | 1,0 | 1,0 | 1,0 |
| Silan | TESPD | 6,7 | 6,7 | 6,7 | 6,7 | 6,7 | 6,7 | 6,7 |
| | | | | | | | | |
| (Primär-)Beschleuniger | TBBS | 1,8 | 1,8 | 1,8 | 1,8 | 1,8 | 1,8 | 1,8 |
| Sekundärbeschleuniger | DPG | - | - | 1,5 | 2,5 | - | 1,5 | 2,5 |
| Schwefel | S | 1,6 | 1,6 | 1,6 | 1,6 | 1,6 | 1,6 | 1,6 |

**Tabelle 2a**

| **Versuchsergebnisse** | | **V1** | **V2** | **V3** | **V4** | **V5** | **E1** | **E2** |
|---|---|---|---|---|---|---|---|---|
| | | | | | | | | |
| Anvulkanisationszeit t5 | [min] | 2,9 | 3,2 | 3,4 | 2,7 | 0,8 | 2,3 | 2,2 |
| Ausvulkanisationszeit t90 | [min] | 22 | 23 | 15 | 12 | 22 | 12 | 8,7 |
| | | | | | | | | |
| Vernetzungsgeschwindigkeit | k (30% / 90%) | 0,128 | 0,125 | 0,205 | 0,275 | 0,117 | 0,275 | 0,433 |
| | INDEX (Basis = 100, x > 100 = besser) | 100 | 98 | 160 | 215 | 91 | 215 | 338 |
| | Performance von E1 bzw E2 berechnet aus V1+V2+V4, bzw V1+V3+V4 | | | | | | 149 | 204 |
| | synergistischer Performancegewinn [%] | | | | | | + **66** | +**134** |
| | | | | | | | | |
| Verlustfaktor | tan d (max) | 0,199 | 0,207 | 0,191 | 0,189 | 0,179 | 0,163 | 0,154 |
| | INDEX (Basis = 100, x > 100 = besser) | 100 | 96 | 104 | 106 | 111 | 122 | 129 |
| | Performance von E1 bzw E2 berechnet aus V1+V2+V4, bzw V1+V3+V4 | | | | | | 110 | 113 |
| | synergistischer Performancegewinn [%] | | | | | | **+ 12** | **+ 16** |
| | | | | | | | | |
| Wärmebildung | Temperaturentwicklung [°C] INDEX (Basis = 100, x > 100 = besser) | 58,3 | 62,2 | 88,7 | 86,6 | 70,7 | 89,7 | 86,8 |
| | | 100 | 94 | 66 | 67 | 82 | 65 | 67 |
| | Performance von E1 bzw E2 berechnet aus V1+V2+V4, bzw V1+V3+V4 | | | | | | 42 | 43 |
| | synergistischer Performancegewinn [%] | | | | | | **+ 23** | **+ 24** |
| | | | | | | | | |
| Ozonbeständigkeit | nach 24 Stunden | 4 | 1,5 | 4 | 4 | 4 | 1 | 0 |
| | nach 120 Stunden | 4 | 4 | 4 | 4 | 4 | 2,5 | 2 |

**Tabelle 1b**

| **Zusammensetzung** | | **V6** | **V7** | **V8** | **V9** | **V10** | **E3** | **E4** |
|---|---|---|---|---|---|---|---|---|
| | | | | | | | | |
| Naturkautschuk | TSR | 10,0 | 10,0 | 10,0 | 10,0 | 10,0 | 10,0 | 10,0 |
| Butadienkautschuk | BUNA CB25 (Fa. Lanxess) | 20,0 | 20,0 | 20,0 | 20,0 | 20,0 | 20,0 | 20,0 |
| Styrolbutadienkautschuk | NS116 (Fa. Nippon Zeon) | 60,0 | 60,0 | 60,0 | 60,0 | - | - | - |
| Styrolbutadienkautschuk | NS616 (Fa. Nippon Zeon, OH-Gruppen und / oder Epoxygruppen modifiziert) | - | - | - | - | 60,0 | 60,0 | 60,0 |
| Ruß | N339 (Fa. DGW) | 10,0 | 10,0 | 10,0 | 10,0 | 10,0 | 10,0 | 10,0 |
| Fällungskieselsäure | VN3 (Fa. Degussa) | 95,0 | 95,0 | 95,0 | 95,0 | 95,0 | 95,0 | 95,0 |
| Weichmacher | RAE (Tudalen 5138, Fa. Dahleke) | 55,0 | 55,0 | 55,0 | 55,0 | 55,0 | 55,0 | 55,0 |
| Ozonschutzmittel | 6PPD | - | 2,0 | - | - | - | 2,0 | 2,0 |
| Zinkoxid | Zinkoxid | 2,0 | 2,0 | 2,0 | 2,0 | 2,0 | 2,0 | 2,0 |
| Stearinsäure | Stearinsäure | 1,0 | 1,0 | 1,0 | 1,0 | 1,0 | 1,0 | 1,0 |
| Silan | TESPD | 8,5 | 8,5 | 8,5 | 8,5 | 8,5 | 8,5 | 8,5 |
| | | | | | | | | |
| (Primär-)Beschleuniger | TBBS | 1,8 | 1,8 | 1,8 | 1,8 | 1,8 | 1,8 | 1,8 |
| Sekundärbeschleuniger | DPG | - | - | 1,9 | 3,15 | - | 1,9 | 3,15 |
| Schwefel | S | 1,6 | 1,6 | 1,6 | 1,6 | 1,6 | 1,6 | 1,6 |

**Tabelle 2b**

| **Versuchsergebnisse** | | **V6** | **V7** | **V8** | **V9** | **V10** | **E3** | **E4** |
|---|---|---|---|---|---|---|---|---|
| | | | | | | | | |
| Anvulkanisationszeit t5 | [min] | 3,2 | 3,1 | 2,9 | 2,7 | 0,8 | 2,5 | 2,4 |
| Ausvulkanisationszeit t90 | [min] | 20,4 | 21,1 | 17,3 | 11,4 | 20,9 | 11,8 | 9,5 |
| | | | | | | | | |
| Vernetzungsgeschwindigkeit | k (30% / 90%) | 0,104 | 0,099 | 0,157 | 0,217 | 0,095 | 0,220 | 0,355 |
| | INDEX (Basis = 100, x > 100 = besser) | 100 | 95 | 151 | 209 | 91 | 212 | 341 |
| | Performance von E1 bzw E2 berechnet aus V1+V2+V4, bzw V1+V3+V4 | | | | | | 137 | 195 |
| | synergistischer Performancegewinn [%] | | | | | | **+ 75** | **+ 146** |
| | | | | | | | | |
| Verlustfaktor | tan d (max) | 0,249 | 0,266 | 0,244 | 0,240 | 0,227 | 0,210 | 0,197 |
| | INDEX (Basis = 100, x > 100 = besser) | 100 | 94 | 102 | 104 | 110 | 119 | 126 |
| | Performance von E1 bzw E2 berechnet aus V1+V2+V4, bzw V1+V3+V4 | | | | | | 106 | 108 |
| | synergistischer Performancegewinn [%] | | | | | | **+ 13** | **+ 18** |
| | | | | | | | | |
| Wärmebildung | Temperaturentwicklung [°C] | 65,2 | 67,1 | 94,2 | 91,8 | 74,5 | 90,9 | 85,4 |
| | INDEX (Basis = 100, x > 100 = besser) | 100 | 97 | 69 | 71 | 88 | 72 | 76 |
| | Performance von E1 bzw E2 berechnet aus V1+V2+V4, bzw V1+V3+V4 | | | | | | 54 | 56 |
| | synergistischer Performancegewinn [%] | | | | | | **+18** | **+20** |
| | | | | | | | | |
| Ozonbeständigkeit | nach 24 Stunden | 4 | 1,5 | 4 | 4 | 4 | 1 | 0 |
| | nach 120 Stunden | 4 | 4 | 4 | 4 | 4 | 2 | 2 |

## Patentansprüche

1. Kautschukmischung, **gekennzeichnet durch** folgende Zusammensetzung:
- 0,1 - 50 phr zumindest eines natürlichen oder synthetischen Polyisoprens und
- 0,1 - 40 phr zumindest eines Butadienkautschuks und
- 10 - 99,8 phr zumindest eines modifizierten Styrolbutadienkautschuks und
- 1 - 300 phr zumindest einer amorphen Kieselsäure und / oder Fällungskieselsäure und
- 0 - 120 phr zumindest eines Rußes und
- 0,5 - 10 phr zumindest eines Ozonschutzmittels und
- 0,5 - 10 phr zumindest eines Sekundärbeschleunigers und
- 2 - 200 phr weitere Zusatzstoffe.

2. Kautschukmischung nach Anspruch 1, **dadurch gekennzeichnet, dass** sie 0,2 - 40 phr zumindest eines natürlichen oder synthetischen Polyisoprens enthält.

3. Kautschukmischung nach Anspruch 1 oder 2, **dadurch gekennzeichnet, dass** sie 1 - 40 phr zumindest eines Butadienkautschuks enthält.

4. Kautschukmischung nach einem der Ansprüche 1 bis 3, **dadurch gekennzeichnet, dass** sie 10 - 80 phr zumindest eines modifizierten Styrolbutadienkautschuks enthält.

5. Kautschukmischung nach einem der Ansprüche 1 bis 4, **dadurch gekennzeichnet, dass** der Styrolbutadienkautschuk mit Hydroxylgruppen und / oder Epoxygruppen und / oder Siloxangruppen und / oder Aminogruppen und / oder Aminosiloxan und / oder Carboxylgruppen und / oder Phtalocyaningruppen modifiziert ist.

6. Kautschukmischung, **gekennzeichnet durch** folgende Zusammensetzung:
- 0,1 - 50 phr zumindest eines natürlichen oder synthetischen Polyisoprens und
- 10 - 99,8 phr zumindest eines Butadienkautschuks und
- 0,1 - 40 phr zumindest eines modifizierten Styrolbutadienkautschuks und
- 1 - 300 phr zumindest einer amorphen Kieselsäure und / oder Fällungskieselsäure und
- 0 - 120 phr zumindest eines Rußes und
- 0,5 - 10 phr zumindest eines Ozonschutzmittels und
- 0,5 - 10 phr zumindest eines Sekundärbeschleunigers und
- 2 - 200 phr weitere Zusatzstoffe.

7. Kautschukmischung nach Anspruch 6, **dadurch gekennzeichnet, dass** sie 0,2 - 40 phr zumindest eines natürlichen oder synthetischen Polyisoprens enthält.

8. Kautschukmischung nach Anspruch 6 oder 7, **dadurch gekennzeichnet, dass** sie 1 - 40 phr zumindest eines modifizierten Styrolbutadienkautschuks enthält.

9. Kautschukmischung nach einem der Ansprüche 6 bis 8, **dadurch gekennzeichnet, dass** der Styrolbutadienkautschuk mit Hydroxylgruppen und / oder Epoxygruppen und / oder Siloxangruppen und / oder Aminogruppen und / oder Aminosiloxan und / oder Carboxylgruppen und / oder Phtalocyaningruppen modifiziert ist.

10. Kautschukmischung nach einem der Ansprüche 6 bis 9, **dadurch gekennzeichnet, dass** sie 10 - 80 phr zumindest eines Butadienkautschuks enthält.

11. Kautschukmischung nach einem der Ansprüche 1 bis 10, **dadurch gekennzeichnet, dass** sie 1 - 250 phr amorphe Kieselsäure und / oder Fällungskieselsäure enthält.

12. Kautschukmischung nach einem der Ansprüche 1 bis 11, **dadurch gekennzeichnet, dass** sie 1 - 10 phr eines Ozonschutzmittels enthält.

13. Kautschukmischung nach einem der Ansprüche 1 bis 12, **dadurch gekennzeichnet, dass** das Ozonschutzmittel ausgewählt ist aus der Gruppe der Paraphenylendiamine und / oder Diphenylamine.

14. Kautschukmischung nach Anspruch 13, **dadurch gekennzeichnet, dass** das Ozonschutzmittel N-(1,3-dimethylbutyl)-N'-phenyl-p-phenylendiamin und / oder octyliertes Diphenylamin ist.

15. Kautschukmischung nach einem der Ansprüche 1 bis 14, **dadurch gekennzeichnet, dass** sie 0,5 - 8 phr eines Sekundärbeschleunigers enthält.

16. Kautschukmischung nach einem der Ansprüche 1 bis 15, **dadurch gekennzeichnet, dass** der Sekundärbeschleuniger Diphenylguanidin ist.

17. Kautschukmischung nach einem der Ansprüche 1 bis 16, **dadurch gekennzeichnet, dass** das Verhältnis zwischen amorpher Kieselsäure und / oder Fällungskieselsäure und Sekundärbeschleuniger folgender Formel entspricht: (phr Kieselsäure x BET-Zahl Kieselsäure) / phr Sekundärbeschleuniger < 10000 m²/g.

18. Verwendung einer Kautschukmischung nach einem der Ansprüche 1 bis 17 zur Herstellung eines Reifens.

19. Verwendung einer Kautschukmischung nach Anspruch 18 zur Herstellung des Laufstreifens eines Reifens und / oder einer Body-Mischung.

20. Verwendung einer Kautschukmischung nach einem der Ansprüche 1 bis 19 zur Herstellung eines Gurtes und / oder eines Riemens.
